# EUROPÄISCHE PATENTSCHRIFT

(11) **EP 2 336 058 B1**
(45) Veröffentlichungstag und Bekanntmachung des Hinweises auf die Patenterteilung: **14.03.2012**
(21) Anmeldenummer: 10195659.7
(22) Anmeldetag: 17.12.2010
(51) Int. Cl.: B65G 47/90

(54) **Verfahren und Vorrichtung zum Bewegen einer Mehrzahl von Briketten**
Device and method for moving a number of briquettes
Procédé et dispositif de déplacement d'une multitude de briquettes

(30) Priorität: 18.12.2009 DE 102009059723
(43) Veröffentlichungstag der Anmeldung: 22.06.2011
(73) Patentinhaber: RWE Power Aktiengesellschaft, 45128 Essen (DE)
(72) Erfinder: vom Bauer, Christiane, 50968, Köln (DE)
(74) Vertreter: Heine, Christian Klaus

(56) Entgegenhaltungen:
- DE-A1- 3 340 282
- DE-A1- 3 718 601
- JP-A- 54 053 457
- JP-A- 59 114 223

## Beschreibung

Gegenstand der vorliegenden Erfindung ist ein Verfahren und eine Vorrichtung zum Bewegen einer Mehrzahl von Brennstoffformkörpern. Das erfindungsgemäße Verfahren und die erfindungsgemäße Vorrichtung kommen insbesondere beim Greifen und Bewegen von mehreren, oberflächenstrukturierten Brennstoffformkörpern, die nebeneinander liegen, zum Einsatz, insbesondere beim Greifen und Bewegen einer Mehrzahl von Brennstoffformkörpern insbesondere Briketts.

Beim Verpacken bzw. Umpacken von empfindlichen Gegenständen kann oft nicht auf eine übliche Verpackungs- bzw. Umpackungseinheit mit einem üblichen Robotergreifarm, wie beispielsweise aus der DE 33 40 282 A1 bekannt, zurückgegriffen werden, da es dann leicht zu Beschädigungen der Oberfläche der ver- bzw. umzupackenden Waren kommen kann. Dies trifft insbesondere auch für Briketts wie bspw. Kaminofenbriketts aus Braunkohle zu. Diese sind relativ empfindlich gegenüber mechanischen Belastungen, die zum Bruch der Briketts oder auch zur Oberflächenbeschädigung mit erheblicher Staubbildung führen können. Dies schmälert die Akzeptanz dieser Briketts beim Kunden, da die oberflächenbeschädigten Briketts zu einer sehr hohen Verstaubung führen. Deshalb wurden bisher regelmäßig Briketts händisch bewegt oder in speziell ausgebildeten Maschinen manipuliert.

Hiervon ausgehend liegt der vorliegenden Erfindung die Aufgabe zugrunde, die aus dem Stand der Technik bekannten Nachteile zumindest teilweise zu überwinden und insbesondere ein Verfahren und eine Vorrichtung zum Bewegen einer Mehrzahl von Brennstoffformkörpern anzugeben, mit denen auch eine Mehrzahl von Briketts bewegt und gegriffen werden kann, ohne dass es zur Beschädigung der entsprechenden Briketts kommt.

Diese Aufgabe wird gelöst mit den Merkmalen der unabhängigen Ansprüche, die jeweiligen abhängigen Ansprüche sind auf vorteilhafte Weiterbildungen gerichtet.

Das Verfahren gemäß Anspruch 1

lässt sich insbesondere mit entsprechend ausgebildeten Robotern ausführen. Bei den Objekten handelt es sich erfindunsssemäß um Brennstoffformkörper, insbesondere Briketts, bevorzugt Kaminbriketts insbesondere Braunkohle Diese weisen eine Oberfläche mit Strukturierungen auf, die auf einer ersten Seite der Oberfläche einen Vorsprung und auf einer gegenüberliegenden Oberfläche einen entsprechenden Rücksprung vorsehen. Hierdurch können solche Briketts leicht gestapelt werden, indem die Vorsprünge einer ersten Lage mit den Rücksprüngen einer darüberliegenden zweiten Lage in Eingriff gebracht werden oder in diesen zu liegen kommen. Werden nunmehr diese unterschiedlichen Lagen miteinander verbunden, bspw. durch eine Umreifung, so entstehen Bündel oder Pakete von Briketts, die leicht transportierbar sind. Unter den unterschiedlichen Höhen wird verstanden, dass erstes und zweites Greifmittel so ausgebildet sind, dass sie eine kraft- und/oder formschlüssige Verbindung auf gegenüberliegenden Seiten in jeweils unterschiedlichen Höhen des oder der Objekte ausbilden können. So können bei Brennstoffformkörpern oder Briketts die Rücksprünge und Vor-sprünge zur Ausbildung einer besonders zuverlässigen Verbindung genutzt werden. Insbesondere kann eines der beiden Greifmittel länger als das andere Greifmittel sein.

Bisher wurden solche Brikettpackungen mit speziell dafür hergestellten Maschinen erstellt, was dazu führt, dass dann, wenn die Packungsgröße geändert werden sollte, also insbesondere eine andere Anzahl von Briketts miteinander verpackt werden sollte, ein umständlicher und sehr aufwändiger Umbau der Maschinen erfolgen musste. Weiterhin war es aufgrund der empfindlichen Oberfläche der Briketts nur händisch möglich, bestimmte Packungsgrößen, die durch die Ausbildung der entsprechenden Verpackungsmaschine vorgegeben waren, in andere Packungsgrößen umzupacken. So konnte nur auf manuellem Wege auf unterschiedliche Bedürfnisse des Marktes reagiert werden.

Das erfindungsgemäße Verfahren beruht darauf, dass speziell angepasste erste und zweite Greifmittel mit einer Struktur der Oberfläche der Brennstoffformkörper, also dem Rücksprung oder dem Vorsprung der Briketts in Eingriff gebracht werden können, um so insbesondere durch Andrücken eine kraftschlüssige oder durch die Form und Positionierung der Greifmittel eine formschlüssige Verbindung mit den entsprechenden Briketts hergestellt werden kann. Insbesondere können so Lagen von Briketts, bei denen die Briketts nebeneinander so ausgerichtet sind, dass jeweils die Vorsprünge und Rücksprünge in die gleiche Richtung ausgerichtet sind und nebeneinander liegen, gegriffen werden können. Hierbei sind erste und zweite Greifmittel insbesondere länger als ein Brikett breit ist, so dass immer eine Mehrzahl von Briketts gegriffen werden können.

Durch die Ausbildung der kraft- und/oder formschlüssigen Verbindung mit der Mehrzahl von Briketts können sogar Lagen gegriffen und bewegt werden, bei denen eines oder mehrere Briketts nicht formstabil, geschrumpft, zerstört oder beschädigt sind. Durch die entsprechende Ausbildung der anderen Greifmittel, die gleichzeitig sämtliche der zu bewebewegenden Mehrzahl von Brennstoffformkörpern greift und mit jedem der Brennstoffformkörper eine kraft- und/oder formschlüssige Verbindung ausbildet können die verbleibenden Brennstoffformkörper problemlos gegriffen und bewegt werden.

Erfindungsgemäß umfassen die Objekte Brennstoffformkörper, deren Oberfläche einen Rücksprung auf einer ersten Seite und einen korrespondierenden Vorsprung auf einer der ersten Seite gegenüberliegenden zweiten Seite umfasst.

Bei den Brennstoffformkörpern kann es sich insbesondere um Briketts, bevorzugt aus einem Material umfassend Braunkohle, handeln. Diese weisen eine relativ empfindliche Oberfläche gegenüber mechanischen Beeinträchtigungen auf, so dass es mit üblichen Greifwerkzeugen insbesondere von Verpackungsrobotern schnell und in hohem Maße zu einer Beschädigung der Oberflächen der Briketts kommt. Dies verhindert dann die Weiterverarbeitung oder schränkt allgemein die Verkäuflichkeit ein.

Von daher kann das erfindungsgemäße Verfahren in vorteilhafter Weise für die Ver- bzw. Umpackung von Brennstoffformkörpern wie Briketts eingesetzt werden.

Gemäß einer weiteren vorteilhaften Ausgestaltung des erfindungsgemäβen Verfahrens wird die Lage der Mehrzahl von Brennstoffformkörpern erfasst und diese Lage zur Justierung der Greifmittel relativ zu den Brennstoffformkörpern vor Ausbildung der Verbindung zwischen den Greifmitteln und den Brennstoffformkörpern verwendet.

Unter der Lage der Brennstoffformkörper werden hier insbesondere die Koordinaten der einzelnen Brennstoffformkörper oder auch die Koordinaten und Erstreckung der Kanten der Mehrzahl von Brennstoffformkörpern verstanden. Bevorzugt wird die Lage der Mehrzahl von Brennstoffformkörpern auf zumindest eine der folgenden Arten erfasst:
a) auf mechanischem Wege;
b) auf induktivem Wege;
c) auf optischem Wege; und
d) auf akustischem Wege.

Unter einer Erfassung der Lage der Mehrzahl von Brennstoffformkörpern auf mechanischen Wege wird insbesondere die Ausbildung von entsprechenden Laufrollen oder federbelasteten Elementen verstanden, die auf oder an die entsprechenden Brennstoffformkörper drücken und so eine Lagedetektion ermöglichen. Bei einer Detektion auf induktivem Wege wird über die Veränderung der Induktivität einer Spule eines Schwingkreises die Lage oder die Änderung der Lage des oder der Brennstoffformkörper(s) verstanden.

Bei der Lagebestimmung auf optischem Wege wird die Lage des Brennstoffformkörpers bzw. der Brennstoffformkörper bzw. insbesondere der Kanten der Brennstoffformkörper auf optischem Wege, also insbesondere durch Ausbildung von Lichtschranken oder auch durch eine entsprechende Kamera mit einer angepassten Auswertungseinheit. Bei einer Detektion auf akustischem Wege liegt insbesondere eine Ultraschalldetektion vor.

Bei der Manipulation von Brennstoffformkörpern ist die Lageerfassung auf mechanischem und/oder induktivem Wege bevorzugt, da diese Verfahren relativ schmutzunempfindlich sind, da insbesondere der induktive Sensor gekapselt ausgeführt werden kann, so dass kein Kohlenstaub mit dem Sensor in Berührung kommt und diesen verschmutzt und so dessen Messergebnisse beeinflusst.

Entgegen der zu erwartenden Probleme durch Verunreinigungen, insbesondere bei Briketts durch Kohlestaub, hat sich die Lagebestimmung auf optischem Wege als besonders vorteilhaft herausgestellt. Insbesondere wird dabei das unterschiedliche Reflektionsverhalten von Kanten und Flächen der Brennstoffform-körper genutzt, also mit einer Lichtquelle, insbesondere punktuell, die Brennstoffformkörper angestrahlt und die unterschiedliche Reflektion an Seitenflächen und Kanten der Brennstoffformkörper detektiert.

Gemäß einer weiteren vorteilhaften Ausgestaltung des erfindungsgemäßen Verfahrens werden die Brennstoffformkörper vor und/oder bei Ausbildung der Verbindung zwischen den Greifmitteln und den Brennstoffformkörpern relativ zueinander ausgerichtet.

Wenn das erste und/oder das zweite Greifmittel gerade und sich länger erstreckend als die entsprechende Ausdehnung eines einzelnen Brennstoffformkörpers ausgebildet werden, kommt es dann, wenn die Strukturen der einzelnen Brennstoffformkörper parallel und gleichsinnig ausgerichtet sind, zu einer Ausrichtung der einzelnen Brennstoffformkörper zueinander, da diese beim Zugreifen gegen die Greifmittel gedrückt und von diesen leicht verschoben werden können.

Gemäß einer weiteren vorteilhaften Ausgestaltung des erfindungsgemäβen Verfahrens werden die Greifmittel vor der Ausbildung der Verbindung mit den Strukturen automatisch relativ zu den Strukturen positioniert.

Dies kann insbesondere unter Berücksichtigung der Lagedaten erfolgen, die insbesondere auf mechanischem und/oder induktivem Wege gewonnen werden. Die automatische Positionierung erleichtert den Greifvorgang und beschleunigt das Greifen und Bewegen der Brennstoffformkörper.

Gemäß einem weiteren Aspekt der vorliegenden Erfindung wird eine Vorrichtung zum Bewegen einer Mehrzahl von Brennstoffformkörpern vorgeschlagen, deren Oberfläche Strukturen in Form eines Rücksprungs auf einer ersten Seite und eines korrespondierenden Vorsprungs auf einer der ersten Seite gegenüberliegenden zweiten Seite umfasst , mit einem erstens Greifmittel und einem zweites Greifmittel, wobei das erste Greifmittel und das zweite Greifmittel so ausgebildet sind, dass sie zur Ausbildung einer kraftschlüssigen und/oder formschlüssigen Verbindung mit der Mehrzahl von Brennstoffformkörpern in oder an jeweils eine Struktur der Oberfläche der Brennstoffformkörper anlegbar sind, wobei eine erste Höhe des ersten Greifmittels kleiner ist als eine zweite Höhe des zweiten Greifmittels.

Unter den unterschiedlichen Höhen wird verstanden, dass erstes und zweites Greifmittel so ausgebildet sind, dass sie eine kraft- und/oder formschlüssige Verbindung auf gegenüberliegenden Seiten in jeweils unterschiedlichen Höhen des oder der Brennstoffformkörper ausbilden können. So können bei Brennstoffformkörpern oder Briketts die Rücksprünge und Vorsprünge zur Ausbildung einer besonders zuverlässigen Verbindung genutzt werden. Insbesondere kann eines der beiden Greifmittel länger als das andere Greifmittel sein.

Gemäß einer vorteilhaften Ausgestaltung der erfindungsgemäßen Vorrichtung ist mindestens eines der folgenden Greifmittel:
- erstes Greifmittel und
- zweites Greifmittel
als schwenkbare Platte mit mindestens einer Verdickung ausgebildet.

Bevorzugt ist eine Ausgestaltung, bei der die Verdickung eine Form aufweist, die einen Eingriff und/oder Formschluss mit der entsprechenden Struktur der Brennstoffformkörper ermöglicht oder befördert. Insbesondere können die Verdickungen mit kreisförmigem oder ellipsoidem Querschnitt ausgebildet werden, um so auch bei gewissen Toleranzen in der Fertigung der Objekte die Ausbildung eines entsprechenden Formschlusses zu ermöglichen. Die Verdickung kann insbesondere zumindest teilweise aus einem elastomeren Material ausgebildet sein.

Gemäß einer vorteilhaften Ausgestaltung der erfindungsgemäßen Vorrichtung ist mindestens eines der folgenden Greifmittel:
- erstes Greifmittel und
- zweites Greifmittel
vorgespannt.

Dies kann insbesondere durch eine entsprechende Feder erfolgen, die die Greifmittel gegen die zu bewegenden Brennstoffformkörper drückt. So kann vermieden werden, dass bspw. dann, wenn die Greifmittel pneumatisch bewegt werden, beim Ausfall der Pneumatik eines oder mehrere dieser Brennstoffformkörper verloren werden.

Gemäß einer vorteilhaften Ausgestaltung sind die Greifmittel pneumatisch bewegbar.

Eine pneumatische Bewegung der Greifmittel ist einfach und kostengünstig sowie leicht ansteuerbar realisierbar.

Gemäß einer vorteilhaften Ausgestaltung der erfindungsgemäßen Vorrichtung ist mindestens ein Sensor zur Erfassung der Lage der Brennstoffformkörper ausgebildet. Insbesondere handelt es sich hierbei um mechanische, induktive, optische und/oder akustische Sensoren. Besonders bevorzugt bei einer Vorrichtung zum Bewegen einer Mehrzahl von Briketts ist die Ausbildung von mechanischen und induktiven Sensoren, da diese schmutzempfindlich sind bzw. entsprechend gekapselt werden können, ohne dass die Einsetzbarkeit und die Messergebnisse der Sensoren eingeschränkt würde.

Gemäß einer weiteren vorteilhaften Ausgestaltung der erfindungsgemäβen Vorrichtung umfasst der Sensor einen induktiven Sensor, der gekapselt ausgebildet ist.

Die für das erfindungsgemäße Verfahren offenbarten Details und Vorteile lassen sich auf die erfindungsgemäße Vorrichtung übertragen und anwenden und umgekehrt. Im Folgenden wird die Erfindung unter Bezugnahme auf die beigefügten Figuren näher erläutert, ohne dass sie auf die dort gezeigten Ausführungsbeispiele und Details beschränkt wäre. Es zeigen schematisch:
- Fig. 1: eine erste, seitliche, Ansicht eines Ausführungsbeispieles einer erfindungsgemäßen Vorrichtung;
- Fig. 2: eine zweite, seitliche, Ansicht des Ausführungsbeispieles einer erfindungsgemäßen Vorrichtung;
- Fig. 3: eine Draufsicht des Ausführungsbeispieles einer erfindungsge- mäßen Vorrichtung;
- Fig. 4: eine Draufsicht auf ein Brikett;
- Fig. 5: eine Ansicht eines Brikettstapels; und
- Fig. 6: eine seitliche Ansicht einer Brikettlage in Verbindung mit den Greifmitteln der erfindungsgemäßen Vorrichtung.

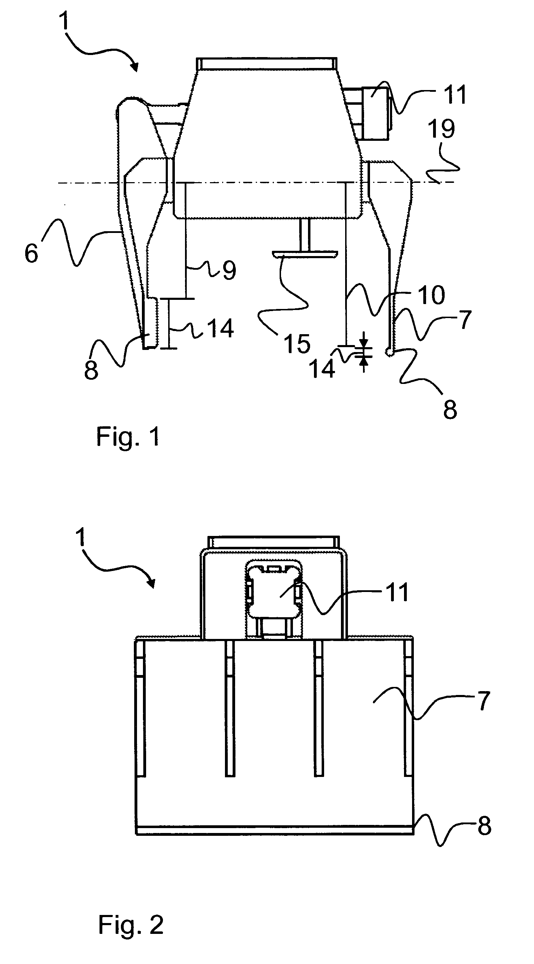

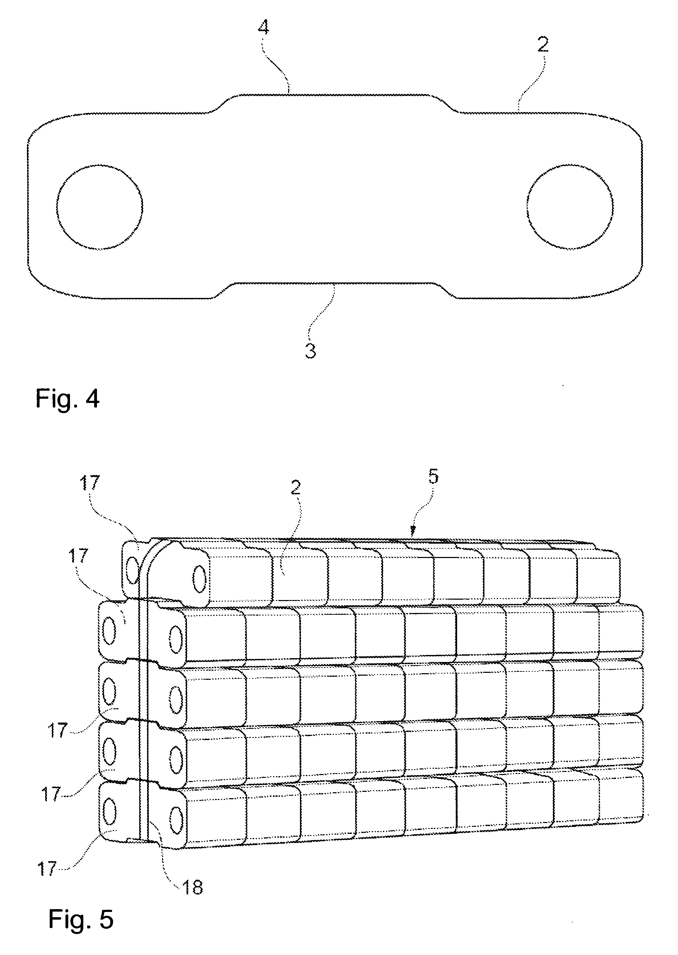

Die erfindungsgemäße Vorrichtung wird im Folgenden insbesondere unter Bezugnahme auf die Figuren 1 bis 3 beschrieben. Fig. 1 zeigt schematisch eine erste seitliche Ansicht einer erfindungsgemäßen Vorrichtung 1 zum Bewegen von Brennstoffformkörpern. Ein Beispiel eines solchen Brennstoffformkörpers ist schematisch in Draufsicht in Fig. 4 gezeigt. Es handelt sich hierbei um einen Brennstoffformkörper, insbesondere ein Brikett 2 zumindest teilweise aufgebaut aus Braunkohle. Das Brikett 2 weist einen Rücksprung 3 und einen Vorsprung 4 auf. Rücksprung 3 und Vorsprung 4 liegen an einer einander gegenüberliegenden Seiten des Briketts 2. Rücksprung 3 und Vorsprung 4 sind zueinander korrespondierend ausgebildet, so dass Briketts beim Stapeln oder Aneinanderlegen mit Rücksprung 3 und Vorsprung 4 ineinander greifen oder ineinander zu liegen kommen. Dies stabilisiert Stapel von Briketts 2.

Fig. 5 zeigt einen Stapel 5 aus mehreren Briketts 2, der aus mehreren Lagen 17 aufgebaut ist. Der Stapel 5 kann auch aus einer einzelnen Lage 17 von Briketts 2 aufgebaut sein. Die Vorrichtung 1 dient dem Bewegen einer Mehrzahl solcher Brennstoffformkörper wie Briketts 2, deren Oberfläche mindestens zwei einander gegenüberliegende Strukturen aufweist. Die Vorrichtung 1 weist ein erstes Greifmittel 6 und ein zweites Greifmittel 7 auf. Das erste Greifmittel 6 und das zweite Greifmittel 7 sind so ausgebildet, dass sie kraft- und/oder formschlüssig mit jeweils einer Struktur der Objekte verbindbar und gemeinsam mit diesen beweglich sind.

Im Falle des Stapels 5 nach Fig. 5 können so nach Entfernung eines Umreifungsbandes 18, mit dem die Lagen 17 zusammengehalten werden, die Briketts 2 Lage 17 und Lage 17 mit den Greifmitteln 6, 7 gegriffen und bewegt werden. Dies ist bevorzugt dann möglich, wenn der Stapel 5 liegt, also die einzelnen Lagen 17 so ausgerichtet sind wie Fig. 7 zu entnehmen.

Erstes Greifmittel 6 und zweites Greifmittel 7 sind im vorliegenden Ausführungsbeispiel als schwenkbare Platten ausgebildet, die jeweils eine Verdickung 8 aufweisen. Die Verdickung 8 kann mit dem Rücksprung 3 bzw. dem Vorsprung 4 eines Briketts 2 in Eingriff gebracht werden oder in diesen zu liegen kommen. Die erste Höhe 9 des ersten Greifmittels 6 ist kleiner als die zweite Höhe 10 des zweiten Greifmittels 7. So kann bevorzugt das erste Greifmittel 6 mit dem Rücksprung 3 eines Briketts 2 und das zweite Greifmittel 7 mit der Unterkante des Vorsprungs 4 eines Briketts 2 verbunden werden.

Unter der Höhe 9, 10 wird dabei der Abstand in Bezug auf eine Referenzebene 19, die bevorzugt die Befestigung der Greifmittel 6, 7 an der Vorrichtung 1 umfasst, verstanden, in dem eine kraft- und/oder formschlüssige Verbindung zum Brennstoffformkörper hergestellt wird. Die Höhe 9, 10 kann durch die Länge der Greifmittel 6, 7 und die Lage und Ausdehnung der Verdickungen 8 an den Greifmitteln 6, 7 variiert und eingestellt werden. So ergibt die Verdickung 8 des ersten Greifmittels 6 eine kleinere erste Höhe 9 als die durch die Verdickung 8 des zweiten Greifmittels 7 bestimmte zweite Höhe 10.

Die Ausbildung dieser Verbindungen erfolgt durch das Andrücken der Greifmittel 6, 7 beziehungsweise der jeweiligen Verdickungen 8 an Rücksprung 3 und Vorsprung 4 der Briketts 2. Die Lage der Verdickungen 8 und deren Ausdehnung 14 ist an die Form der Briketts 2 angepasst, so dass nach dem Greifen die Verdickung 8 des ersten Greifmittels 6 in den Rücksprung 3 mindestens eines Briketts 2 und die Verdickung 8 des zweiten Greifmittels 7 in den Vorsprung 4 mindestens eines Briketts 2.

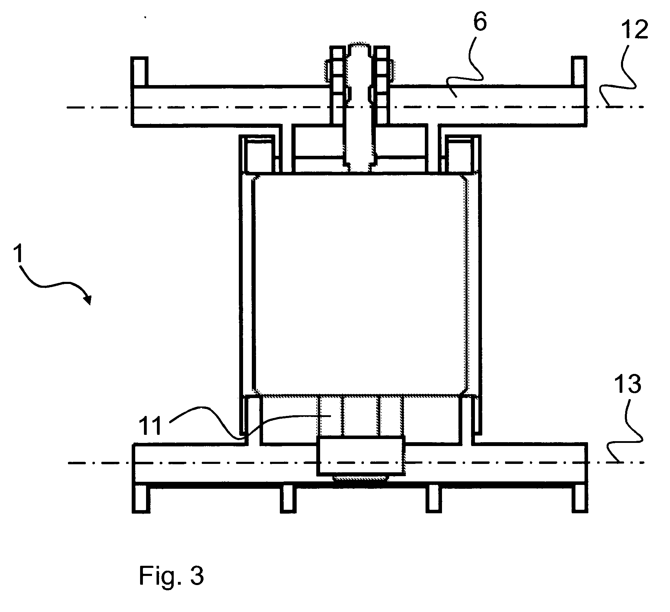

Insbesondere können durch die ersten Greifmittel 6 und zweiten Greifmittel 7 mehrere nebeneinander liegende Briketts 2 gleichzeitig gegriffen werden. Die ersten Greifmittel 6 und zweiten Greifmittel 7 werden durch Pneumatikzylinder 11 bewegt. Wie insbesondere auch Fig. 3 entnehmbar ist, kann so das erste Greifmittel 6 um eine erste Schwenkachse 12 und das zweite Greifmittel 7 um eine zweite Schwenkachse 13 verschwenkt werden. Durch eine entsprechende Ausbildung von erstem Greifmittel 6 und erster Schwenkachse 12 und zweitem Greifmittel 7 und zweiter Schwenkachse 13 werden die Greifmittel in vorteilhafter Weise so verschwenkt, dass nur die Verdickungen 8 der Greifmittel 6, 7 am Brikett 2 anliegen. So kann in vorteilhafter Weise insbesondere die Beschädigung des Vorsprungs 4 durch das erste Greifmittel 6 vermieden werden.

Weiterhin ruht das Brikett 2 auch durch Gravitationswirkung auf den Verdickungen 8 der Greifwerkzeuge 6, 7, die in Abmessung und Position an Rücksprung 3 und Vorsprung 4 angepasst sind. Dadurch dass die Greifmittel 6, 7 vorgespannt sind, das heißt auch bei Ausfall der Pneumatikzylinder 11 durch Federkraft gegen die Mehrzahl von Briketts 2 gedrückt werden, wird die Lage 17 von Briketts 2, also die Mehrzahl von Brennstoffformkörpern, auch bei Ausfall der Pneumatikzylinder 11 durch die erfindungsgemäße Vorrichtung 1 gehalten. So kann es beim Ausfall des pneumatischen Druckes nicht zu Verlusten von Brennstoffformkörpern bei Bewegung kommen, die eine Verletzungsgefahr für Benutzer darstellen können.

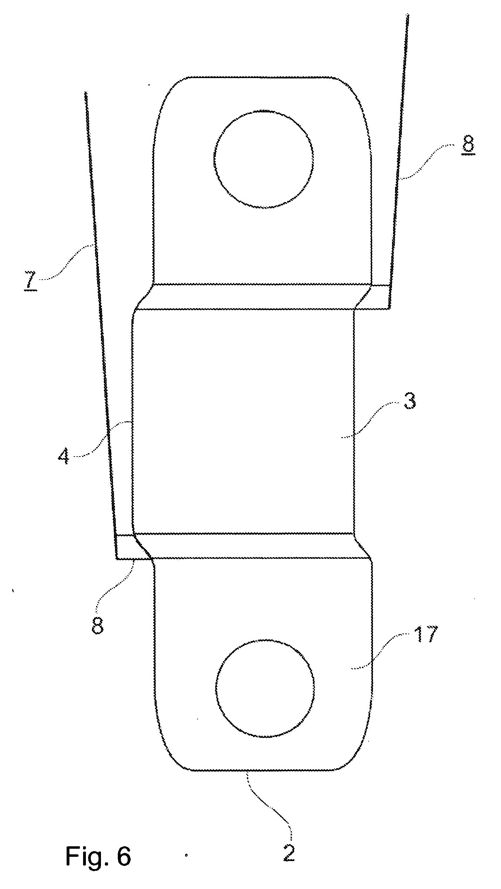

Wie insbesondere Fig. 6 zeigt können die Verdickungen 8 verschiedene Formen annehmen. Insbesondere kann eine Form der Verdickung 8 mit kreisförmigen oder ellipsoiden Querschnitt gewählt werden, auch die Ausbildung in Form von Polygonen gemäß Fig. 6 ist möglich und erfindungsgemäß.

Die Fig. 3 zeigt die erfindungsgemäße Vorrichtung 1 zum Bewegen einer Mehrzahl von Brennstoffformkörpern in Draufsicht. Fig. 1 zeigt ferner einen Sensor 15 zur Erfassung der Lage der Briketts 2 beim Aufnehmen der Briketts 2. Dieser Sensor 15 ist ein induktiver Sensor, der die Relativposition der Briketts 2 zum Sensor 15 und deren Änderung auf induktivem Wege erfasst. Der Sensor 15 ist gekapselt ausgeführt, um zu verhindern, dass er durch das Eindringen von Kohlenstaub aus dem Briketts 2 in seiner Funktion beeinträchtigt wird. Ferner kann ein mechanischer Sensor (hier nicht gezeigt) ausgebildet sein, mit dem die Randlage der Briketts 2 zu detektieren ist. Bei dem mechanischen Sensor kann es sich um ein federbelastetes Element handeln.

Die erfindungsgemäße Vorrichtung 1 und das erfindungsgemäße Verfahren erlauben es, auch empfindliche Brennstoffformkörper wie beispielsweise Briketts 2 zu greifen und zu bewegen ohne dass diese beschädigt werden.

### Bezugszeichenliste

- 1: Vorrichtung
- 2: Brikett
- 3: Rücksprung
- 4: Vorsprung
- 5: Stapel
- 6: erstes Greifmittel
- 7: zweites Greifmittel
- 8: Verdickung
- 9: erste Höhe
- 10: zweite Höhe
- 11: Pneumatikzylinder
- 12: erste Schwenkachse
- 13: zweite Schwenkachse
- 14: Ausdehnung
- 15: Sensor
- 16: mechanischer Sensor
- 17: Lage
- 18: Umreifungsband
- 19: Referenzebene

## Patentansprüche

1. Verfahren zum Bewegen einer Mehrzahl von Brennstoffformkörpern, deren Oberfläche mindestens zwei Strukturen aufweist, wobei die Strukturen einen Rücksprung (3) auf einer ersten Seite und einen korrespondierenden Vorsprung (4) auf einer der ersten Seite gegenüberliegenden zweiten Seite umfassen, wobei ein erstes Greifmittel (6) und ein zweites Greifmittel (7) in oder an jeweils einer Struktur mit den Brennstoffformkörpern kraftschlüssig und/oder formschlüssig verbunden werden und dann die Greifmittel (6, 7) mit den Brennstoffformkörpern bewegt werden, wobei eine erste Höhe (9) des ersten Greifmittels (6) kleiner ist als eine zweite Höhe (10) des zweiten Greifmittels (7), so dass erstes (6) und zweites Greifmittel (7) eine kraft- und/oder formschlüssige Verbindung auf gegenüberliegenden Seiten in jeweils unterschiedlichen Höhen der Brennstoffformkörper ausbilden.

2. Verfahren nach Anspruch 1, bei dem die Lage der Mehrzahl von Brennstofformkörpern erfasst wird und diese Lage zur Justierung der Greifmittel (6, 7) relativ zu den Brennstoffformkörpern vor Ausbildung der Verbindung zwischen den Greifmitteln (6, 7) und den Brennstoffformkörpern verwendet wird.

3. Verfahren nach Anspruch 2, bei dem die Lage der Mehrzahl von Brennstoffformkörpern auf zumindest eine der folgenden Arten erfasst wird:
a) auf mechanischem Wege;
b) auf induktivem Wege;
c) auf optischem Wege; und
d) auf akustischem Wege.

4. Verfahren nach einem der vorhergehenden Ansprüche, bei dem die Brennstoffformkörpern vor und/oder bei Ausbildung der Verbindung zwischen den Greifmitteln (6, 7) und den Brennstoffformkörpern relativ zueinander ausgerichtet werden.

5. Verfahren nach einem der vorhergehenden Ansprüche, bei dem die Greifmittel (6, 7) vor der Ausbildung der Verbindung mit den Strukturen automatisch relativ zu den Strukturen positioniert werden.

6. Vorrichtung (1) zum Bewegen einer Mehrzahl von Brennstoffformkörpern, deren Oberfläche als Strukturen einen Rücksprung (3) auf einer ersten Seite und einen korrespondierenden Vorsprung (4) auf einer der ersten Seite gegenüberliegenden zweiten Seite umfasst, mit einem ersten Greifmittel (6) und einem zweiten Greifmittel (7), wobei das erste Greifmittel (6) und das zweite Greifmittel (7) so ausgebildet sind, dass sie zur Ausbildung einer kraftschlüssigen und/oder formschlüssigen Verbindung mit der Mehrzahl von Brennstoffformkörpern in oder an jeweils eine Struktur der Oberfläche der Brennstoffformkörper anlegbar sind, wobei eine erste Höhe (9) des ersten Greifmittels (6) kleiner ist als eine zweite Höhe (10) des zweiten Greifmittels (7), so dass erstes (6) und zweites Greifmittel (7) eine kraft- und/oder formschlüssige Verbindung auf gegenüberliegenden Seiten in jeweils unterschiedlichen Höhen der Brennstoffformkörper ausbilden können.

7. Vorrichtung (1) nach Anspruch 6, bei der mindestens eines der folgenden Greifmittel:
- erstes Greifmittel (6) und
- zweites Greifmittel (7)
als schwenkbare Platten mit mindestens einer Verdickung (8) ausgebildet ist.

8. Vorrichtung (1) nach Anspruch 6 oder 7, bei der mindestens eines der folgenden Greifmittel
- erstes Greifmittel (6) und
- zweites Greifmittel (7)
vorgespannt ist.

9. Vorrichtung (1) nach einem der Ansprüche 6 bis 8, bei der mindestens ein Sensor (15, 16) zur Erfassung der Lage der Brennstoffformkörper ausgebildet ist.

10. Vorrichtung (1) nach Anspruch 9, bei der der Sensor einen induktiven Sensor (15) umfasst, der gekapselt ausgebildet ist.

## Claims

1. Method for moving a plurality of fuel mouldings, the surface of which has at least two structures, wherein the structures comprise a recess (3) on a first side and a corresponding protrusion (4) on a second side opposite the first side, wherein a first gripping means (6) and a second gripping means (7) are connected to the fuel mouldings in a force-fitting and/or form-fitting manner in or on in each case one structure and then the gripping means (6, 7) are moved together with the fuel mouldings, wherein a first height (9) of the first gripping means (6) is lower than a second height (10) of the second gripping means (7), so that the first gripping means (6) and the second gripping means (7) establish a force-fitting and/or form-fitting connection on opposite sides at in each case different heights of the fuel mouldings.

2. Method according to Claim 1, in which the position of the plurality of fuel mouldings is detected and this position is used to adjust the gripping means (6, 7) in relation to the fuel mouldings before the connection between the gripping means (6, 7) and the fuel mouldings is established.

3. Method according to Claim 2, in which the position of the plurality of fuel mouldings is detected in at least one of the following ways:
a) mechanically;
b) inductively;
c) optically; and
d) acoustically.

4. Method according to one of the preceding claims, in which the fuel mouldings are aligned with one another before and/or during the establishment of the connection between the gripping means (6, 7) and the fuel mouldings.

5. Method according to one of the preceding claims, in which the gripping means (6, 7) are positioned automatically in relation to the structures before the establishment of the connection with the structures.

6. Arrangement (1) for moving a plurality of fuel mouldings, the surface of which comprises as structures a recess (3) on a first side and a corresponding protrusion (4) on a second side opposite the first side, having a first gripping means (6) and a second gripping means (7), wherein the first gripping means (6) and the second gripping means (7) are configured such that they are placeable in or on in each case one structure of the surface of the fuel mouldings in order to establish a force-fitting and/or form-fitting connection with the plurality of fuel mouldings, wherein a first height (9) of the first gripping means (6) is lower than a second height (10) of the second gripping means (7), so that the first gripping means (6) and the second gripping means (7) can establish a force-fitting and/or form-fitting connection on opposite sides at in each case different heights of the fuel mouldings.

7. Arrangement (1) according to Claim 6, in which at least one of the following gripping means:
- first gripping means (6) and
- second gripping means (7)
is configured as pivotable plates having at least one thickened portion (8).

8. Arrangement (1) according to Claim 6 or 7, in which at least one of the following gripping means
- first gripping means (6) and
- second gripping means (7)
is prestressed.

9. Arrangement (1) according to one of Claims 6 to 8, in which at least one sensor (15, 16) is configured to detect the position of the fuel mouldings.

10. Arrangement (1) according to Claim 9, in which the sensor comprises an inductive sensor (15) which is configured in an encapsulated manner.

## Revendications

1. Procédé pour déplacer plusieurs corps façonnés de combustible dont la surface présente au moins deux structures, les structures comprenant un retrait (3) sur un premier côté et une saillie correspondante (4) sur un deuxième côté opposé au premier côté,
un premier moyen de saisie (6) et un deuxième moyen de saisie (7) étant reliés en correspondance mécanique et/ou en correspondance géométrique aux corps façonnés de combustible dans ou sur une structure respective, les moyens de saisie (6, 7) étant ensuite déplacés avec les corps façonnés de combustible,
une première hauteur (9) du premier moyen de saisie (6) étant inférieure à une deuxième hauteur (10) du deuxième moyen de saisie (7) de telle sorte que les liaisons en correspondance mécanique et/ou en correspondance géométrique formée sur des côtés opposés respectivement par le premier moyen de saisie (6) et le deuxième moyen de saisie (7) soient situées à des hauteurs différentes sur les corps façonnés de combustible.

2. Procédé selon la revendication 1, dans lequel la position des différents corps façonnés de combustible est saisie et cette position est utilisée pour ajuster les moyens de saisie (6, 7) par rapport aux corps façonnés de combustible avant la formation d'une liaison entre les moyens de saisie (6, 7) et les corps façonnés de combustible.

3. Procédé selon la revendication 2, dans lequel la position des différents corps façonnés de combustible est saisie d'au moins l'une des manières suivantes :
a) par voie mécanique,
b) par voie inductive,
c) par voie optique et
d) par voie acoustique.

4. Procédé selon l'une des revendications précédentes, dans lequel les corps façonnés de combustible sont orientés les uns par rapport aux autres avant et/ou lors de la formation de la liaison entre les moyens de saisie (6, 7) et les corps façonnés de combustible.

5. Procédé selon l'une des revendications précédentes, dans lequel les moyens de saisie (6, 7) sont positionnés automatiquement par rapport aux structures avant la formation de la liaison avec les structures.

6. Dispositif (1) destiné à déplacer plusieurs corps façonnés de combustible dont la surface présente comme structures un retrait (3) sur un premier côté et une saillie correspondante (4) sur un deuxième côté opposé au premier côté,
le dispositif présentant un premier moyen de saisie (6) et un deuxième moyen de saisie (7),
le premier moyen de saisie (6) et le deuxième moyen de saisie (7) étant configurés de manière à pouvoir être placés dans ou sur une structure respective de la surface des corps façonnés de combustible pour former une liaison en correspondance mécanique et/ou en correspondance géométrique avec les différents corps façonnés de combustible,
la première hauteur (9) du premier moyen de saisie (6) étant inférieure à une deuxième hauteur (10) du deuxième moyen de saisie (7) de telle sorte que le premier moyen de saisie (6) et le deuxième moyen de saisie (7) puissent former une liaison en correspondance mécanique et/ou en correspondance géométrique sur des côtés opposés à des hauteurs différentes sur les corps façonnés de combustible.

7. Dispositif (1) selon la revendication 6, dans lequel au moins l'un des moyens de saisie suivants :
- le premier moyen de saisie (6) et
- le deuxième moyen de saisie (7)
sont configurés comme plaques pivotantes présentant au moins un épaississement (8).

8. Dispositif (1) selon les revendications 6 ou 7, dans lequel au moins l'un des moyens de saisie suivants :
- le premier moyen de saisie (6) et
- le deuxième moyen de saisie (7)
est précontraint.

9. Dispositif (1) selon l'une des revendications 6 à 8, dans lequel au moins un détecteur (15, 16) est configuré pour détecter la position des corps façonnés de combustible.

10. Dispositif (1) selon la revendication 9, dans lequel le détecteur comporte un détecteur inductif (15) encapsulé.
